# EUROPÄISCHE PATENTSCHRIFT

(11) **EP 0 384 379 B1**
(45) Veröffentlichungstag und Bekanntmachung des Hinweises auf die Patenterteilung: **07.01.1993**
(21) Anmeldenummer: 90103209.4
(22) Anmeldetag: 20.02.1990
(51) Int. Cl.: C03B 19/08, C03C 11/00

(54) **Verfahren zur Herstellung von Formkörpern aus geblähtem Glas**
Method of manufacturing blown glass bodies
Procédé de fabrication de produits expansés en verre

(30) Priorität: 24.02.1989 DE 3905672
(43) Veröffentlichungstag der Anmeldung: 29.08.1990
(73) Patentinhaber: FELS-WERKE GmbH, D-38640 Goslar (DE)
(72) Erfinder: Lohrmann, Horst, Dr.-Ing., D-3340 Wolfenbüttel (DE); Ehlers, Günter, D-3320 Salzgitter (DE)
(74) Vertreter: Röse, Horst

(56) Entgegenhaltungen:
- EP-A- 0 194 171
- DE-A- 2 352 551
- DE-C- 913 579
- US-A- 3 532 480

## Beschreibung

Die Erfindung bezieht sich auf ein Verfahren zur Herstellung von Formkörpern, insbesondere Bauplatten, aus geblähtem Glas nach dem Oberbegriff des Anspruchs 1.

Derartige Verfahren sind bekannt. Bei einem bekannten Verfahren (z.B. DE-C-913 579) wird zerkleinertes Glas oder Pulverglas mit einem Blähmittel vermischt. Aus dem Gemisch hergestellte Formkörper werden in einer Form in einem Tunnelofen erhitzt, wobei in Bereichen von 750 bis 1300° C durch Gasentwicklung ein Blähvorgang stattfindet, der zu einem porigen Formkörper führt. Bei dieser Verfahrensweise sind der Verlauf der Blähvorgänge und die Porenbildung von den verschiedenen Blähmitteln, z.B. Sulfate, Karbonate, Graphite, Kohle usw., von dem Temperaturverlauf beim Erhitzen und Abkühlen und von der Körnung und Gestaltung des Ausgangsmaterials abhängig.

Bei einem bekannten Verfahren (EP-A-01 94 171) wird geblähtes Glas aus 100 Gew.-Teilen zerkleinerten Glases und 0,2 bis 2 Gew.-Teilen einer bestimmten Mischung aus Calciumkarbonat und Magnesiumkarbonat in feuerfesten Formen bei einem bestimmten Wärmeprogramm hergestellt. Dabei wird eine pulverförmige Mischung verwendet, die Glasmehl mit einer Kornfeinheit von 70 bis 96 % unter 0,200 mm und weniger als 70 % unter 0,100 mm enthält. Als Nachteile dieser bekannten Verfahren hat sich herausgestellt, daß weder eine ausreichende Porosität noch eine ausreichende Gasdurchlässigkeit erzielt wird und eine nur ungleichmäßige Porosierung entsteht bis zur Bildung von größeren Hohlräumen. Die auf bekannte Weise hergestellten Formkörper und insbesondere Bauplatten sind daher für die meisten Anwendungsfälle in ihren Eigenschaften unzureichend.

Der Erfindung liegt die Aufgabe zugrunde, ein Verfahren nach dem Oberbegriff des Anspruchs 1 zu schaffen, mit dem auch möglichst einfache und wirtschaftliche Weise Formkörper aus geblähtem Glas und insbesondere Bauplatten daraus hergestellt werden können, die möglichst gleichmäßige Porendurchmesser, eine hohe Porosität, hohe bauphysikalische Wasserdampfdurchlässigkeit, d.h. niedrige Wasserdampf-Diffusionswiderstandszahl, und eine geringe Rohdichte aufweisen.

Dies wird nach der Erfindung dadurch erreicht, daß, ausgehend von dem Verfahren nach dem Oberbegriff des Anspruchs, zunächst Glasmehl mit einer Kornfeinheit unter 0,250 mm und davon einem Anteil von 45 bis 80 Gew.-% mit einer Kornfeinheit von unter 0,040 mm und das Blähmittel vermischt und danach aus dieser Mischung noch ohne Wärmeeinwirkung Rohlinge mit einer Größe von 1 bis 30 mm unter Formgebung hergestellt werden, daß diese Rohlinge auf die auf mindestens Blähtemperatur erhitzte Unterlage mit gegenseitigen für ihre Volumenvergrößerung ausreichenden lichten Abständen als wenigstens eine Lage aufgebracht und unter Wärmeeinwirkung bei 750 bis 1000° C gebläht werden, so daß ein zusammenhängender Formkörper gebildet wird.

Es hat sich gezeigt, daß dieses verhältnismäßig einfache Verfahren zu Formkörpern aus geblähtem Glas führt, die die gewünschten gleichmäßigen Porendurchmesser, eine hohe Porosität, eine hohe bauphysikalische Wasserdampfdurchlässigkeit, also eine niedrige Wasserdampf-Diffusionswiderstandszahl (kleiner als 20/40 nach DIN 4108) und eine geringe Rohdichte im Fertigprodukt (ca. 0,24 g/cm³ und geringer) aufweisen. Unerwünschte größere Hohlräume werden vollständig vermieden.

Die genannten Rohlinge werden durch Druckanwendung in Form von Briketts, durch Granulierung in Form von Pellets oder als stranggepreßte und dann abgetrennte Formlinge hergestellt.

In der DE-A-2 352 551 ist ein Verfahren zur Herstellung einer Verbundplatte aus glaskeramischer Deckschicht und Schaumglasschicht bekannt, bei dem zur Verbindung der Schaumglasschicht mit der Glaskeramikschicht das schäumbare Teilchengemisch im Überschuß in eine Form eingegeben und gegen den sich in der geschlossenen Form aufbauenden Druck aufgeschäumt wird. Eine Verbindung zur erfindungsgemäßen, als offen zu bezeichnenden Verfahrensweise besteht nicht. In der US-A-3 532 480 ist die Herstellung eines plattenförmigen Strangs aus Schaumglas mit Hilfe von strangbegrenzenden Förderbändern beschrieben, bei dem jeweils unter Wärmeeinwirkung ein teilweises Vorschäumen und danach ein endgültiges Aufschäumen gegen beidseitige Bandbegrenzung durchgeführt wird. Weitere Berührungen mit dem erfindungsgemäßen Verfahren ergeben sich nicht. Die geschilderten Wirkungen und Vorteile der Erfindung sind bei beiden geschilderten bekannten Verfahrensweisen nicht erzielbar.

Als besonders zweckmäßig hat sich erwiesen, wenn der Anteil an Blähmittel 0,1 bis 10 Gew.-%, vorzugsweise 2 bis 4 Gew.-% beträgt. Vorteilhaft wird als Blähmittel kristallines Calciumkarbonat verwendet.

Als besonders geeignet für die Herstellung der gewünschten Formkörper und insbesondere Bauplatten hat sich die Herstellung von Rohlingen mit einer Größe von 5 bis 15 mm und einer Dichte von 1,45 bis 1,80 g/cm³ erwiesen.

Auch wurde festgestellt, daß bei trockener Herstellung und Formgebung der Rohlinge wesentlich stärkere Blähwirkung eintritt als bei feuchter Herstellung und Formgebung. Es hat sich außerdem ergeben, daß feucht hergestellte und geformte Rohlinge mit einem Wasser-Feststoff-Verhältnis von 0 bis 0,3, vorzugsweise 0,1 bis 0,2 vor dem Blähen nicht getrocknet werden müssen, sondern mit ihrer vollständigen Feuchte sofort der Blähtemperatur ausgesetzt werden können.

Zur Erzielung der geschilderten Vorteile besonders förderlich ist es, wenn das verwendete Glasmehl eine Kornfeinheit von unter 0,125 mm aufweist und davon einen Anteil mit einer Kornfeinheit unter 0,040 mm von wenigstens angenähert 66 Gew.-% enthält.

Insbesondere bei der Herstellung von Bauplatten aus geblähtem Glas mit dem Verfahren nach der Erfindung ist es besonders vorteilhaft, wenn in weiterer Ausgestaltung der Erfindung wie folgt vorgegangen wird: Die erfindungsgemäß hergestellten Rohlinge werden auf die erhitzte Unterlage in mehreren aufeinanderfolgenden Lagen aufgebracht. Jeweils vor dem Aufbringen der nächstfolgenden Lage wird die bereits aufgebrachte Lage derart gebläht, daß das Blähmittel nicht vollständig zersetzt wird. Sodann wird die nächstfolgende Lage aufgebracht, so daß die thermische Zersetzung des Blähmittels der vorhergehenden Lage in den Blähvorgang der nächstfolgenden Lage hineinreicht, der Blähvorgang der vorhergehenden Lagen also aufrechterhalten bleibt. Zweckmäßig wird dabei so verfahren, daß der Blähvorgang mit Hilfe der Wärmeeinwirkung auf die jeweils aufgebrachte Lage durchgeführt wird, die kurz vor dem Aufbringen der nächst folgenden Lage eine kurzzeitige Temperaturerhöhung erfährt, die kurz nach dem Aufbringen dieser nächstfolgenden Lage auf die vorhergehende Lage wieder zurückgenommen wird, wonach bei der vorhergehenden Temperatur weiter gebläht wird. Dadurch wird ein besonders homogenes Verfahrenser- gebnis mit den geschilderten Eigenschaften erzielt.

In weiterer Ausgestaltung des Verfahrens nach der Erfindung können der Mischung für die Herstellung der Rohlinge zusätzlich brennbare Teilchen, insbesondere Faserstoffe wie Papierfasern, zu einem Anteil, bezogen auf die Rohlinge, von 0,05 bis 5 Gew.-%, vorzugsweise 0,1 bis 2 Gew.-%, beigemischt werden. Hierdurch wird der Porendurchmesser vergleichmäßigt und die bauphysikalische Wasserdampfdurchlässigkeit erhöht.

Besonders vorteilhaft ist es ferner, wenn in weiterer Ausgestaltung der Erfindung die Rohlinge vor dem oder während des Auftragens auf die Unterlage bzw. die vorhergehende Lage mit bei den Blähtemperaturen brennbaren Teilchen, insbesondere Faserstoffen wie Papierfasern, gemischt werden. Diese brennbaren Teilchen legen den gegenseitigen lichten Abstand der blähfähigen Rohlinge fest, indem der lichte Abstand zwischen den Rohlingen ausgefüllt wird. Diese Teilchen führen ferner zu einer zusätzlichen Erwärmung mit Abstandserzeugung. Nach erfolgtem Blähvorgang ergibt sich eine Haufwerksporosität.

Das Verfahren wird zweckmäßig auf einer bewegbaren Unterlage, insbesondere einem Formboden, durchgeführt, wobei ganz besonders ein Stahlförderband mit seitlichen Borden eingesetzt wird. Dieser Formboden bzw. dieses Stahlförderband durchfährt für die Wärmeeinwirkung, also für den Blähvorgang, zweckmäßig einen Tunnelofen.

Als besonders vorteilhaft hat es sich erwiesen, wenn in weiterer Ausgestaltung der Erfindung vor dem Aufbringen der Rohlinge auf die Unterlage eine Bodentrennschicht aus Steinmehl aufgebracht wird. Dieses Steinmehl bildet am Formkörper und insbesondere an der Bauplatte eine Deck- und Trennschicht, die einen geeigneten Haftgrund für mineralische, alkalisch reagierende Mörtel mit Kalkhydrat und/oder Zement als Bindemittel bildet.

Die Erfindung wird anhand des nachfolgenden Ausführungsbeispiels erläutert.

Es wird Glasmehl mit einer Kornfeinheit unter 0,125 mm und davon einem Anteil von 66 Gew.-% mit einer Feinheit unter 0,040 mm und kristallines Calciumkarbonat, z.B. Calcit oder Arragonit, als Blähmittel gemischt, und es werden aus dieser Mischung Rohlinge in Form von Briketts oder Pellets oder abgetrennten Teilchen von stranggepreßten Formlingen hergestellt. Der Anteil an Blähmittel beträgt dabei 0,1 bis 10 Gew.-%, vorzugsweise 2 bis 4 Gew.-%. Die aus der Mischung hergestellten Rohlinge erhalten eine Größe von 1 bis 30 mm, vorzugsweise 5 bis 15 mm, und eine Dichte von 1,45 bis 1,80 g/cm³.

Auf eine bewegbare Unterlage, insbesondere ein Stahlförderband mit seitlichen Borden, wird als Bodentrennschicht Steinmehl aufgebracht. Darauf werden in einer ersten Lage die hergestellten Rohlinge so ausgestreut, daß für die erwünschte Volumenvergrößerung der einzelnen Rohlinge ein ausreichend lichter Zwischenraum für den späteren Blähvorgang zur Verfügung steht. Zum Beispiel werden 10 bis 12 Briketts mit Abmessungen von 11 mm Mal 11 mm auf 60 cm² ausgestreut. Dabei wird die Unterlage mindestens auf Blähtemperatur vorerhitzt, um die richtige, allseitige Temperaturbehandlung der Rohlinge der ersten Lage sicherzustellen.

Das Stahlförderband mit dieser ersten Lage wird danach in einen Tunnelofen gefahren und dort einer Wärmeeinwirkung mit Temperaturen von 750 bis 950° C unterworfen. Der Blähvorgang dieser ersten Lage wird bis zum Maximum unter allseitiger, gleichmäßiger Wärmeeinwirkung bei der angegebenen Temperatur durchgeführt, und es erfolgt danach eine kurzzeitige Temperaturerhöhung, z.B. bis ca. 1000° C. Danach wird die nächste Lage von Rohlingen aufgebracht, und es wird die geschilderte kurzzeitige Temperaturerhöhung kurz nach diesem Aufbringen der nächsten Lage wieder zurückgenommen, wonach bei der anfangs angegebenen normalen Temperatur weitergebläht wird. In dieser Weise werden weitere Lagen in gewünschter Anzahl aufgebracht und behandelt.

Dabei wird die zeitliche Folge des Aufbringens der einzelnen Lagen von Rohlingen so durchgeführt, daß beim Blähen der jeweils einzelnen Lage das Blähmittel nicht vollständig zersetzt wird sondern die thermische Zersetzung noch in den Blähvorgang der nächstfolgenden Lage hineinreicht und der Blähgrad der einzelnen vorhergehenden Lagen aufrechterhalten bleibt.

Nach Abschluß des geschilderten Schicht- und jeweiligen Blähvorgangs wird der so erzielte Formkörper so langsam abgekühlt, insbesondere bis unterhalb der sogenannten Halteperiode bei ca. 650° C, daß der Blähgrad des gesamten aus den einzelnen Lagen geschichteten Formkörpers insgesamt erhalten bleibt und der Formkörper bei möglichst wenig inneren Spannungen hohe Festigkeiten erreicht.

Nach der Abkühlung können die Formkörper und insbesondere die so hergestellten Bauplatten in die gewünschten Formate zersägt werden. Zur Sicherung z.B. der Alkalibeständigkeit kann eine Beschichtung insbesondere der Oberseite der Formkörper mit einem Kunstharzfilm durchgeführt werden.

## Patentansprüche

1. Verfahren zur Herstellung von Formkörpern, insbesondere Bauplatten, aus geblähtem Glas, bei dem eine Mischung aus zerkleinertem Glas und einem Blähmittel auf einer Unterlage zur Erzeugung eines Bläh- und Schmelzvorgangs erhitzt und danach zur Bildung des Formkörpers abgekühlt wird, dadurch gekennzeichnet, daß zunächst Glasmehl mit einer Kornfeinheit unter 0,250 mm und davon einem Anteil von 45 bis 80 Gew.-% mit einer Kornfeinheit von unter 0,040 mm und das Blähmittel vermischt und danach aus dieser Mischung noch ohne Wärmeeinwirkung Rohlinge mit einer Größe von 1 bis 30 mm unter Formgebung hergestellt werden, daß diese Rohlinge auf die auf mindestens Blähtemperatur erhitzte Unterlage mit gegenseitigen für Ihre Volumenvergrößerung ausreichenden lichten Abständen als wenigstens eine Lage aufgebracht und unter Wärmeeinwirkung bei 750 bis 1000° C gebläht werden, so daß ein zusammenhängender Formkörper gebildet wird.

2. Verfahren nach Anspruch 1, dadurch gekennzeichnet, daß der Anteil an Blähmittel 0,1 bis 10 Gew.-% beträgt.

3. Verfahren nach Anspruch 2, dadurch gekennzeichnet, daß der Anteil an Blähmittel 2 bis 4 Gew.-% beträgt.

4. Verfahren nach einem der Ansprüche 1 bis 3, dadurch gekennzeichnet, daß als Blähmittel kristallines Calciumkarbonat verwendet wird.

5. Verfahren nach einem der Ansprüche 1 bis 4, dadurch gekennzeichnet, daß Rohlinge mit einer Größe von 5 bis 15 mm und einer Dichte von 1,45 bis 1,80 g/cm³ hergestellt werden.

6. Verfahren nach einem der Ansprüche 1 bis 5, dadurch gekennzeichnet, daß die Herstellung und Formgebung der Rohlinge trocken erfolgen.

7. Verfahren nach einem der Ansprüche 1 bis 5, dadurch gekennzeichnet, daß die Herstellung und Formgebung der Rohlinge feucht mit einem Wasser-Feststoff-Verhältnis von 0 bis 0,3 erfolgen.

8. Verfahren nach Anspruch 7, dadurch gekennzeichnet, daß das Wasser-Feststoff-Verhältnis 0,1 bis 0,2 beträgt.

9. Verfahren nach einem der Ansprüche 1 bis 8, dadurch gekennzeichnet, daß das Glasmehl eine Kornfeinheit von unter 0,125 mm aufweist und davon einen Anteil mit einer Kornfeinheit unter 0,040 mm von wenigstens angenähert 66 Gew.-% enthält.

10. Verfahren nach einem der Ansprüche 1 bis 9, dadurch gekennzeichnet, daß die Rohlinge auf die erhitzte Unterlage in mehreren aufeinanderfolgenden Lagen aufgebracht werden und jeweils vor dem Aufbringen der nächstfolgenden Lage die bereits aufgebrachte Lage derart gebläht wird, daß das Blähmittel nicht vollständig zersetzt wird, und sodann die nächstfolgende Lage aufgebracht und gebläht wird, so daß die thermische Zersetzung der vorhergehenden Lage in den Blähvorgang dieser nächstfolgenden Lage hineinreicht und der Blähvorgang der vorhergehenden Lagen aufrechterhalten bleibt.

11. Verfahren nach Anspruch 10, dadurch gekennzeichnet, daß der Blähvorgang mit Hilfe der Wärmeeinwirkung auf die jeweils aufgebrachte Lage durchgeführt und diese Lage kurz vor dem Aufbringen der nächstfolgenden Lage einer kurzseitigen Temperaturerhöhung unterworfen wird, die kurz nach dem Aufbringen dieser nächstfolgenden Lage auf die vorhergehende Lage wieder zurückgenommen wird, wonach bei der vorhergeenden Temperatur weitergebläht wird.

12. Verfahren nach einem der Ansprüche 1 bis 11, dadurch gekennzeichnet, daß der Mischung für die Herstellung der Rohlinge zusätzlich brennbare Teilchen, insbesondere Faserstoffe wie Papierfasern, zu einem Anteil, bezogen auf die Rohlinge, von 0,05 bis 5 Gew.-%, vorzugsweise 0,1 bis 2 Gew.-%, beigemischt werden.

13. Verfahren nach einem der Ansprüche 1 bis 12, dadurch gekennzeichnet, daß die Rohlinge vor dem oder während des Auftragens auf die Unterlage bzw. die vorhergehende Lage mit bei den Blähtemperaturen brennbaren Teilchen gemischt werden.

14. Verfahren nach Anspruch 13, dadurch gekennzeichnet, daß als brennbare Teilchen Faserstoffe verwendet werden.

15. Verfahren nach einem der Ansprüche 1 bis 14, dadurch gekennzeichnet, daß vor dem Aufbringen der Rohlinge auf die Unterlage eine Bodentrennschicht aus Steinmehl aufgebracht wird.

## Claims

1. Method for the manufacture of shaped articles, particularly fabricated plates, from blown glass, in which a mixture of crushed glass and a blowing agent is heated on a foundation for the generation of a blowing and melting process and thereafter is cooled for the formation of the shaped articles, characterised in that glass powder with a particle fineness of less than 0.250 mm and having a proportion of 45 to 80% by weight with a particle fineness of less than 0.040 mm is first mixed with the blowing agent and thereafter, from this mixture and without heating, shaped stock pieces having a dimension of 1 to 30 mm are made, and in that these stock pieces are positioned on the foundation which is heated to at least blowing temperature as at least one layer with sufficient clear spacings therebetween for their volumetric expansion, and are blown while heated at 750 to 1000°C so that a coherent shaped article is formed.

2. Method according to claim 1, characterised in that the proportion of blowing agent is 0.1 to 10% by weight.

3. Method according to claim 2, characterised in that the proportion of blowing agent is 2 to 4% by weight.

4. Method according to one of claims 1 to 3, characterised in that crystalline calcium carbonate is used as blowing agent.

5. Method according to one of claims 1 to 4, characterised in that stock pieces having a dimension of 5 to 15 mm and a density of 1.45 to 1.80 g/cm³ are made.

6. Method according to one of claims 1 to 5, characterised in that the making and shaping of the stock pieces is carried out dry.

7. Method according to one of claims 1 to 5, characterised in that the making and shaping of the stock pieces is carried out damp with a water-to-matter ratio of 0 to 0.3.

8. Method according to claim 7, characterised in that the water-to-matter ratio is 0.1 to 0.2.

9. Method according to one of claims 1 to 8, characterised in that the glass powder has a particle fineness of less than 0.125 mm and of that a proportion of at least approximately 66% by weight has a particle fineness less than 0.040 mm.

10. Method according to one of claims 1 to 9, characterised in that the stock pieces are positioned on the heated foundation in a plurality of successive layers, and each of the already positioned layers is blown before the next following layer is applied to the foundation so that the blowing agent of the former layer is not fully decomposed, and then the next following layer is put into place and blown so that the thermal decomposition of the preceding layer continues during the blowing process of this next following layer and the blowing process of the preceding layers is maintained.

11. Method according to claim 10, characterised in that the blowing process is carried out with the aid of the heating of each new positioned layer and this layer is subjected to a short-term temperature increase shortly before the arrival of the next following layer, with the temperature being lowered again shortly after the positioning of this next following layer on the previous layer, after which the further blowing continues at the previous temperature.

12. Method according to one of claims 1 to 11, characterised in that the mixture for the making of the stock pieces is mixed with additional combustible matter, particularly fibrous matter such as paper fibres, having a proportion in relation to the stock pieces of 0.05 to 5% by weight, preferably 0.1 to 2% by weight.

13. Method according to one of claims 1 to 12, characterised in that the stock pieces are mixed with the matter combustible at the blowing temperature before or during the placing of the stock pieces on the foundation or on the preceding layer.

14. Method according to claim 13, characterised in that fibrous matter is used as combustible matter.

15. Method according to one of claims 1 to 14, characterised in that a bottom separating layer of rock dust is put in place on the foundation before the stock pieces are placed thereon.

## Revendications

1. Procédé pour fabriquer des corps moulés, notamment des panneaux de construction, à partir de verre expansé, selon lequel on chauffe un mélange formé de verre, fragmenté et d'un agent d'expansion sur un support pour l'exécution d'une opération d'expansion et de fusion, puis on le refroidit pour former le corps moulé, caractérisé en ce qu'on mélange tout d'abord de la poudre de verre ayant une taille de grains inférieure à 0,250 mm, et dont un pourcentage de 45 à 80 % en poids à une taille de grains inférieure à 0,040 mm, et l'agent d'expansion, et ensuite on fabrique par formage, à partir de ce mélange, et ce encore sans intervention d'une chaleur, des ébauches possédant une taille de 1 à 30 mm, en ce qu'on dépose ces ébauches selon au moins une couche sur le support chauffé au moins à une température permettant l'expansion, à des intervalles réciproques suffisants pour l'accroissement de volume des ébauches, et qu'on les amène à l'état expansé en leur appliquant une chaleur entre 750 et 1000°C de manière à obtenir un corps moulé d'un seul tenant.

2. Procédé selon la revendication 1, caractérisé en ce que le pourcentage de l'agent d'expansion est compris entre 0,1 et 10 % en poids.

3. Procédé selon la revendication 2, caractérisé en ce que le pourcentage de l'agent d'expansion est compris entre 3 et 4 % en poids.

4. Procédé selon l'une des revendications 1 à 3, caractérisé en ce qu'on utilise comme agent d'expansion, du carbonate de calcium cristallin.

5. Procédé selon l'une des revendications 1 à 4, caractérisé en ce qu'on fabrique des ébauches possédant une taille de 5 à 15 mm et une densité comprise entre 1,45 et 1,80 g/cm³.

6. Procédé selon l'une des revendications 1 à 5, caractérisé en ce que la fabrication et le formage des ébauches s'effectuent à sec.

7. Procédé selon l'une des revendications 1 à 5, caractérisé en ce que la fabrication et le formage des ébauches s'effectuent à l'état humide avec un rapport eau-substance solide compris entre 0 et 0, 3.

8. Procédé selon la revendication 7, caractérisé en ce que le rapport eau-substance solide est compris entre 0,1 et 0,2.

9. Procédé selon l'une des revendications 1 à 8, caractérisé en ce que la poudre de verre a une taille de grains inférieure à 0,125 mm, dont un pourcentage égale au moins approximativement 66 % en poids a une taille de grains inférieure à 0,040 mm.

10. Procédé selon l'une des revendications 1 à 9, caractérisé en ce qu'on dépose les ébauches suivant plusieurs couches successives sur le support chauffé et qu'avant le dépôt de la couche immédiatement suivante, on amène à l'état expansé la couche déjà déposée d'une telle façon que l'agent d'expansion ne se décompose pas complètement, et en ce qu'ensuite on dépose la couche immédiatement suivante et on l'amène à l'état expansé, si bien que la décomposition thermique de la couche précédente intervient lors de l'opération d'expansion de cette couche immédiatement suivante et que l'expansion de la couche précédente est maintenue.

11. Procédé selon la revendication 10, caractérisé en ce que l'opération d'expansion est exécutée chaque fois par action de la chaleur sur la couche déposée et qu'on soumet cette couche à un accroissement de température de brève durée peu avant le dépôt de la couche immédiatement suivante cet accroissement de température étant à nouveau interrompu peu avant le dépôt de cette couche immédiatement suivante sur la couche précédente, à la suite de quoi l'expansion est poursuivie à la température précédente.

12. Procédé suivant l'une des revendications 1 à 11, caractérisé en ce qu'on mélange en supplément, au mélange servant à fabriquer les ébauches, des particules combustibles, notamment des substances fibreuses telles que des fibres de papier, pour un pourcentage qui, rapporté aux ébauches, est compris entr 0,05 et 5 % en poids et de préférence entre 0,1 et 2 % en poids.

13. Procédé suivant l'une des revendications 1 à 12, caractérisé en ce qu'avant ou pendant le dépôt sur la couche inférieure ou la couche précédente, on mélange les ébauches et des particules combustibles aux températures d'expansion.

14. Procédé selon la revendication 1˝, caractérisé en ce qu'on utilise des substances fibreuses comme particules combustibles.

15. Procédé selon l'une des revendications 1 à 14, caractérisé en ce qu'avant le dépôt des ébauches sur le support, on dépose une couche de séparation de fond formée de poussière inerte.
